# EUROPÄISCHE PATENTANMELDUNG

(11) **EP 4 573 865 A1**
(43) Veröffentlichungstag der Anmeldung: **25.06.2025**
(21) Anmeldenummer: 24219717.6
(22) Anmeldetag: 13.12.2024
(51) Int. Cl.: A01C 7/00, A01C 21/00

(54) **ANSPRITZBEGRÜNUNGSVORRICHTUNG ZUR BEGRÜNUNG VON FLÄCHEN SOWIE VERFAHREN ZUM BETREIBEN EINER ANSPRITZBEGRÜNUNGSVORRICHTUNG**

(30) Priorität: 22.12.2023 DE 102023136543
(71) Anmelder: Roess Nature Group GmbH & Co. KG, 27239 Twistringen (DE)
(72) Erfinder: Roess, Thomas, 27239 Twistringen (DE); Schwarz, Armin, 49377 Vechta (DE)
(74) Vertreter: Eisenführ Speiser

(57) **Zusammenfassung**

Es wird eine Anspritzbegrünungsvorrichtung (10) zur Begrünung von Flächen offengelegt, die einen Tank (14) mit einem Innenraum (32) zum Aufnehmen einer Flüssigkeit (30) und einer Auslassöffnung (28) zum Ausgeben der Flüssigkeit (30), eine Pumpe (20) zum Fördern der Flüssigkeit (30) aus dem Innenraum (32) des Tanks (14), eine Mischrohrleitung (44) und eine Abgabeeinheit (34) zum Abgeben der Flüssigkeit (30) aus dem Innenraum (32) des Tanks (14) auf eine zu begrünende Fläche.

Ferner wird ein Verfahren zum Betreiben einer Anspritzbegrünungsvorrichtung (10) und eine Verwendung einer Zerkleinerungsvorrichtung (68) und/oder einer Mischrohrleitung (44) in einer Anspritzbegrünungsvorrichtung (10) mit einem Tank (14) mit einem Innenraum (32) zum Aufnehmen einer Flüssigkeit (30) und einer Auslassöffnung (28) zum Ausgeben der Flüssigkeit (30) und mindestens einer im Innenraum (32) des Tanks (14) angeordneten Mischdüse (56) zum Einspritzen einer Flüssigkeit (30) zum Mischen der Flüssigkeit (30) offengelegt.

## Beschreibung

Die Erfindung betrifft Vorrichtungen zur Begrünung von Flächen, die als Anspritzbegrünungsvorrichtungen bezeichnet werden. Eine Anspritzbegrünung wird auch als Nassansaatverfahren oder Hydroseeding bezeichnet und ist geeignet, schwer erreichbare oder nicht befahrbare Flächen oder Flächen mit besonders schwierigen Standortverhältnissen zuverlässig und dauerhaft zu rekultivieren oder zu begrünen und so beispielsweise vor Erosion zu schützen. Hierbei werden standortangepasste Begrünungsrezepturen aus Saatgut, Dünger-, Bodenhilfs- und Bodenverbesserungsstoffen auf die betreffenden, meist geneigten Flächen mit speziellen Düsen von einer Anspritzbegrünungsvorrichtung aus oder mittels Schlauchleitungen aufgespritzt.

Ein Haftkleber, der auch als Bodenfestiger oder Bodenkleber bezeichnet wird, fixiert das Saatgut dauerhaft untereinander und mit den Bodenteilchen der obersten Bodenschicht zu einer Art Gewebe. Dabei schützt der Kleber die Bodenfläche zusammen mit aufgebrachten Mulchstoffen zuverlässig vor Erosion durch Wind und Wasser. Beispielsweise findet die Anspritzbegrünung Anwendung im Verkehrswegebau, Deichbau, Deponiebau oder bei der Rekultivierung im Tagebau.

Durch eine Mischung der Zutaten einer Begrünungsrezeptur wird demnach eine Flüssigkeit, die auch als Anspritzmasse bezeichnet wird, hergestellt. Die Flüssigkeit wird beispielsweise auf einem Betriebshof, der geeignete Mischvorrichtungen aufweist, stationär zubereitet und in eine Anspritzbegrünungsvorrichtung, die im Wesentlichen einem Pumpfahrzeug entspricht, abgefüllt. Mit der Anspritzbegrünungsvorrichtung wird die Flüssigkeit daraufhin zum Einsatzort transportiert und auf die zu begründende Fläche aufgebracht. Eine derartige Anspritzbegrünungsvorrichtung ist beispielsweise aus dem Dokument US 4,723,710 A bekannt.

Darüber hinaus sind auch Anspritzbegrünungsvorrichtungen bekannt, die selbst ein Rührwerk umfassen, mit denen unmittelbar am Einsatzort eine Flüssigkeit, nämlich eine Anspritzmasse, aus den Zutaten der Begrünungsrezeptur hergestellt werden kann. Eine derartige Anspritzbegrünungsvorrichtung ist beispielsweise aus dem Dokument US 2016/0330900 A1 bekannt.

Rührwerke in Tanks mit Flüssigkeiten entsprechen jedoch mechanisch aufwendigen Komponenten, die beispielsweise gegeneinander abgedichtet sein müssen, um die Flüssigkeiten sicher zu halten. Gerade beim Einsatz von mobilen Anspritzbegrünungsvorrichtungen können neben gewöhnlichem Verschleiß der Komponenten auch mechanische Einwirkungen, beispielsweise durch Erschütterungen eines Fahrzeugs, auf dem ein Tank mit seinem Rührwerk montiert ist, zu hohem Verschleiß und aufwendigen Wartungsarbeiten führen.

Aufgabe der vorliegenden Erfindung ist es daher, den Problemen des Standes der Technik zu begegnen. Insbesondere soll eine Anspritzbegrünungsvorrichtung sowie ein Verfahren zum Betreiben einer solchen Anspritzbegrünungsvorrichtung gefunden werden, die robust ist, die Zubereitung einer Anspritzmasse am Einsatzort ermöglicht und eine homogene Anspritzmasse für ein gleichmäßiges Begrünungsergebnis erzeugt. Insbesondere soll eine Alternative zum Stand der Technik gefunden werden.

Hierzu wird eine Anspritzbegrünungsvorrichtung zur Begrünung von Flächen nach Anspruch 1 vorgeschlagen.

Demnach betrifft die Erfindung eine Anspritzbegrünungsvorrichtung zur Begrünung von zu begrünenden Flächen. Die Anspritzbegrünungsvorrichtung umfasst einen Tank. Der Tank weist einen Innenraum zum Aufnehmen einer Flüssigkeit auf. Die Flüssigkeit entspricht vorzugsweise einer Anspritzmasse oder Rohstoffen oder Zutaten einer Begrünungsrezeptur, die zu einer Anspritzmasse gemischt werden soll. Außerdem umfasst der Tank wenigstens eine Auslassöffnung zum Ausgeben der Flüssigkeit. Der Tank kann auch als Behälter bezeichnet werden und besteht vorzugsweise aus einem Kunststoff. Die Auslassöffnung ist vorzugsweise an einer Unterseite des Tanks angeordnet, so dass bei Ausrichtung des Tanks während eines bestimmungsgemäßen Gebrauchs drucklos im Wesentlichen die gesamte Flüssigkeit aus der Auslassöffnung abfließen kann.

Außerdem umfasst die Anspritzbegrünungsvorrichtung eine Pumpe zum Fördern der Flüssigkeit aus dem Innenraum des Tanks. Die Pumpe weist einen Pumpenfluideingang zum Verbinden mit der Auslassöffnung des Tanks und einen Pumpenfluidausgang auf. Durch den Pumpenfluideingang kann somit die Flüssigkeit oder Anspritzmasse in die Pumpe geführt oder von der Pumpe angesaugt werden. Die Flüssigkeit kann dann durch die Pumpe mit einem Druck beaufschlagt und am Pumpenfluidausgang mit einem erhöhten Druck ausgegeben werden. Die Pumpe ist vorzugsweise eine Dickstoffpumpe zum Fördern normalflüssiger aber auch zäh- oder dickflüssigerer Flüssigkeiten, nämlich dickflüssigen Anspritzmassen.

Außerdem umfasst die Anspritzbegrünungsvorrichtung eine Mischrohrleitung. Die Mischrohrleitung umfasst mehrere im Innenraum des Tanks angeordnete Mischdüsen zum Einspritzen einer Flüssigkeit in den Innenraum, wobei diese Flüssigkeit vorzugsweise die Flüssigkeit ist, die mit der Pumpe aus dem Innenraum gefördert wird. Hierzu ist die Mischrohrleitung mit dem Pumpenfluidausgang verbindbar. Entsprechend ist also eine Rohrleitung, die auch als Mischrohrleitung bezeichnet wird, vorgesehen, die mit dem Pumpenfluidausgang an einem ersten Ende der Mischrohrleitung verbindbar ist, um so aus dem Innenraum mit der Pumpe gepumpte Flüssigkeit, die mit einem Druck beaufschlagt ist, zu empfangen und die druckbeaufschlagte Flüssigkeit bis zu der oder den Mischdüsen zu fördern.

Vorzugsweise weist die Mischrohrleitung mehrere Mischdüsen auf, die entlang der Mischrohrleitung im Innenraum des Tanks angeordnet sind. Vorzugsweise wird mit der Pumpe ein Druck von 1 bis 5 bar erzeugt und die Flüssigkeit mit einem Druck im Bereich von 1 bis 5 bar in den Innenraum über die Mischdüsen eingespritzt. Vorzugsweise bilden somit Tank, Pumpe und Mischrohrleitung einen Kreislauf, bei dem die Flüssigkeit, nämlich vorzugsweise die Anspritzmasse, aus dem Innenraum des Tanks mit der Pumpe über die Mischrohrleitung zurück in den Tank eingespritzt wird.

Vorzugsweise umfasst die Anspritzbegrünungsvorrichtung zudem eine Abgabeeinheit zum Abgeben der Flüssigkeit aus dem Innenraum des Tanks auf eine zu begrünende Fläche. Die Abgabeeinheit ist vorzugsweise ebenfalls mit dem Pumpenfluidausgang zur Abgabe verbindbar. Die Abgabeeinheit umfasst insbesondere eine Abgabearmatur, wie ein Stahlrohr, eine Spritze oder eine Abgabedüse, die beispielsweise nach Art eines Strahlrohrs ausgebildet sein kann. Außerdem umfasst die Abgabeeinheit einen Schlauch zum Verbinden der Abgabearmatur mit dem Pumpenfluidausgang zur Abgabe. Zwischen Schlauch und Pumpenfluidausgang ist vorzugsweise ein Verteilerrohr und ein oder mehrere Ventile angeordnet, um den Pumpenfluidausgang auch selektiv mit der Mischrohrleitung oder dem Schlauch zu verbinden.

Erfindungsgemäß umfasst die Anspritzbegrünungsvorrichtung somit kein mechanisches Rührwerk, sondern ein Mischsystem ohne mechanische Komponenten.

Der Erfindung liegt die Erkenntnis zugrunde, dass ein Mischen der Flüssigkeit, nämlich der Anspritzmasse, auch ohne mechanische Bauteile im Innenraum des Tanks, nämlich mit der Mischrohrleitung und der Mischdüse möglich ist, wenn zuvor ausgewählte Zutaten für die Anspritzmasse bereitgestellt werden. Insbesondere im Fall von einem Substrat, das in Form von Pellets bereitgestellt wird, erfolgt durch die Mischrohrleitung eine schnelle Auflösung und Durchmischung, wenn die Pellets in den bereits mit Flüssigkeit, insbesondere umfassend Wasser, befüllten Tank eingegeben oder eingeschüttet werden.

So kann die Anspritzbegrünungsvorrichtung als mobile Anspritzbegrünungsvorrichtung ausgebildet sein und es kann vor Ort die Anspritzmasse auch in großen Mengen, beispielsweise von mehr als 500 Litern, mehr als 750 Litern oder mehr als 1000 Litern, angemischt werden. Hierbei kann in Pellets bereitgestelltes Material verwendet werden und es kann so vollständig auf mechanische Teile zum Mischen im Innenraum des Tanks, wie beispielsweise Mischwalzen, verzichtet werden, so dass die Anspritzbegrünungsvorrichtung besonders wartungsarm ist.

Gemäß einer ersten Ausführungsform ist die Pumpe eine Kreiselpumpe. Kreiselpumpen eignen sich besonders gut, um hohe Volumenströme für die Durchmischung mittels des Mischrohrs bereitzustellen, so dass eine homogene Anspritzmasse gebildet werden kann.

Gemäß einer weiteren Ausführungsform ist die Pumpe so ausgebildet oder ausgewählt, dass ein Volumenstrom der Pumpe an ein Innenraumvolumen des Innenraums angepasst ist. Insbesondere die Leistung oder die Betriebsparameter der Pumpe, wie etwa Förderhöhe oder Förderdruck sowie Volumenstrom, werden also in Abhängigkeit von der Größe des Tanks ausgewählt. Hierbei erfolgt die Auswahl oder Anpassung der Pumpe so, dass, vorzugsweise bei mindestens 2 bar Förderdruck, der Innenraum in weniger als 15 Minuten, vorzugsweise im Wesentlichen in 10 Minuten oder weniger, vollständig mit der Pumpe leerpumpbar, also insbesondere auch vollständig umwälzbar ist. Der Volumenstrom, in m3/h ausgedrückt, entspricht demnach mindestens dem 0,004-fachen des Innenraumvolumens, ausgedrückt in Liter. Vorzugsweise entspricht der Volumenstrom, in m3/h ausgedrückt, etwa dem oder mindestens dem 0,006-fachen des Innenraumvolumens, ausgedrückt in Liter.

Ein schnelles Ausbringen und gutes Durchmischen wird so ermöglicht.

Gemäß einer weiteren Ausführungsform beträgt das Innenraumvolumen des Tanks ein Volumen im Bereich von 500 Litern bis 10000 Litern, bevorzugt im Bereich von 900 Litern bis 1500 Litern. Eine solches Volumen sorgt für eine homogene und schnelle Durchmischung mit der Mischrohrleitung, während gleichzeitig ein großer Durchsatz zur Begrünung großer Flächen möglich ist.

Gemäß einer weiteren Ausführungsform beträgt der maximale Förderdruck der Pumpe mindestens 2,5 bar, mindestens 3 bar oder mindestens 3,5 bar. Bei einer Förderhöhe von etwa 1 bis 2 Metern während der Durchmischung weist die Pumpe so jedenfalls einen ausreichenden Förderdruck zur Durchmischung auf.

Gemäß einer weiteren Ausführungsform weist die Mischrohrleitung eine Länge von mehr als 1,5 Metern oder mehr als 1,9 Metern bei einem Innenraumvolumen des Innenraums von 500 Litern oder mehr auf. Eine geeignete Wirkung der Mischdüsen auf das Gemisch durch eine Verteilung über eine entsprechende Länge der Mischrohrleitung ist so erzielbar.

Gemäß einer weiteren Ausführungsform weist die Mischrohrleitung mindestens zwei oder mindestens drei Mischdüsen pro 1 Meter Länge auf. Eine homogene Durchmischung ist so noch besser erzielbar.

Gemäß einer weiteren Ausführungsform weist die Mischrohrleitung einen Durchmesser auf, der im Bereich zwischen 30 mm und 250 mm liegt. Bevorzugt weist die Mischrohrleitung einen Durchmesser auf, der im Bereich zwischen 50 mm und 100 mm liegt. Ein geeigneter Volumenstrom durch die Mischrohrleitung ist so bereitstellbar.

Gemäß einer weiteren Ausführungsform weisen die Mischdüsen jeweils einen Durchmesser auf, der im Bereich zwischen 10 mm und 50 mm, bevorzugt im Bereich zwischen 30 mm und 40 mm, liegt. Ein geeigneter Volumenstrom durch Mischdüsen ist so bereitstellbar.

Gemäß einer weiteren Ausführungsform weist die Anspritzbegrünungsvorrichtung eine Zerkleinerungsvorrichtung auf, vorzugsweise mit einer Fräse, zum Zerkleinern von in Ballen bereitgestelltem Fasermaterial und zum Abgeben des zerkleinerten Fasermaterials in den Innenraum des Tanks. Die Zerkleinerungsvorrichtung ist somit Bestandteil der Anspritzbegrünungsvorrichtung und vorzugsweise so am Tank angeordnet, dass zerkleinertes Fasermaterial unmittelbar in den Innenraum des Tanks gefördert wird oder fällt.

Vorzugsweise dient die Zerkleinerungsvorrichtung dazu, Rohstoffe, wie ein Substrat, einer Rezeptur der Anspritzmasse, die außerhalb des Tanks bereitgestellt werden, vor dem Einbringen in den Innenraum des Tanks zu zerkleinern. Insbesondere ist die Zerkleinerungsvorrichtung, die beispielsweise als Fräse ausgebildet ist, zum Zerkleinern von in Ballen bereitgestelltem Fasermaterial, wie beispielsweise Mulchmaterial, ausgebildet.

Durch Bereitstellen einer Zerkleinerungsvorrichtung unmittelbar an der Anspritzbegrünungsvorrichtung kann die Anspritzbegrünungsvorrichtung als mobile Anspritzbegrünungsvorrichtung ausgebildet sein, mit der auch günstiges Ballenmaterial oder in Ballen gepresste Rohstoffe verwendet werden können, ohne dass eine solche Verwendung einen Einfluss auf die Homogenität der Anspritzmasse hat. Auf mechanische Teile zum Mischen im Innenraum des Tanks, wie beispielsweise Mischwalzen, kann weiterhin verzichtet werden, so dass die Anspritzbegrünungsvorrichtung besonders wartungsarm bleibt.

Gemäß einer Ausführungsform ist die Zerkleinerungsvorrichtung auf einer Oberseite des Tanks angeordnet. Die Oberseite des Tanks bezeichnet vorzugsweise die Seite des Tanks, die der Unterseite, die bei bestimmungsgemäßem Gebrauch des Tanks, der auf seiner Unterseite auf dem Boden oder einem Fahrzeug zur Beförderung der Anspritzbegrünungsvorrichtung angeordnet ist, gegenüberliegend die obere Begrenzung des Tanks oder des Innenraums bildet. Die Zerkleinerungsvorrichtung umfasst einen Trichter oder Schacht mit einem Einlass und einem Auslass. Der Einlass dient zur Aufnahme eines Ballens oder zumindest eines Teils des Ballens und der Auslass mündet in einer Öffnung auf der Oberseite des Tanks oder in den Innenraum des Tanks. Demnach kann der Zerkleinerungsvorrichtung ein Ballen von der Oberseite der Zerkleinerungsvorrichtung zugeführt werden und das zerkleinerte Material fällt durch die Schwerkraft in den Innenraum des Tanks. Es sind keine weiteren Fördereinrichtungen und somit keine zusätzlichen mechanischen Förderteile nötig.

Gemäß einer weiteren Ausführungsform weist die Zerkleinerungsvorrichtung zwischen dem Einlass und dem Auslass mindestens einen Zerkleinerungsbereich zum Zerkleinern des Fasermaterials auf. Der Zerkleinerungsbereich weist mindestens eine Welle, die um ihre Längsachse drehbar ist, auf. An der Welle sind ein oder mehrere Fräsräder entlang der Längsachse angeordnet, die um die Längsachse drehbar sind. Besonders bevorzugt weist der Zerkleinerungsbereich zwei drehbare Wellen auf, die vorzugsweise im Betrieb gegenläufig zueinander drehen. Die zwei drehbaren Wellen weisen jeweils ein oder mehrere Fräsräder entlang ihrer jeweiligen Längsachse auf. Vorzugsweise sind die zwei Wellen parallel zueinander in einer Ebene angeordnet, die horizontal bei einem bestimmungsgemäßen Gebrauch der Anspritzbegrünungsvorrichtung ausgerichtet ist. Gemäß einer weiteren bevorzugten Ausführungsform sind drei oder mehr drehbare Wellen im Zerkleinerungsbereich angeordnet, die parallel zueinander, bevorzugt in einer horizontalen Ebene verlaufen, wobei jeweils benachbarte Wellen gegenläufig zueinander drehen. Jede der Wellen weist ein oder mehrere Fräsräder auf, die entlang der Längsachse verteilt sind.

Ein geeigneter Zerkleinerungsbereich für Ballen aus Fasermaterial, nämlich um gepresste Fasern aus ihrem Verbund zu lösen, ist somit geschaffen.

Gemäß einer weiteren Ausführungsform ist der Einlass als Kasten ausgebildet oder umfasst einen Kasten, wobei der Kasten vorzugsweise mit einer Klappe gegenüber einer äußeren Umgebung der Zerkleinerungsvorrichtung zu öffnen und zu schließen ist. Alternativ oder zusätzlich ist der Einlass schwenkbar gegenüber dem Zerkleinerungsbereich und/oder dem Auslass ausgebildet. Vorzugsweise ist der Kasten in seiner Größe angepasst, einen gesamten Ballen des Fasermaterials vollständig aufzunehmen. Insbesondere ist der Kasten in seiner Größe angepasst, einen Ballen in standardisierter Größe vollständig aufzunehmen. Vorzugsweise weist der Kasten eine Länge von mindestens 60 cm und höchstens 110 cm auf. Weiter bevorzugt weist der Kasten eine Breite von mindestens 20 cm und höchstens 50 cm auf. Insbesondere umfasst der Kasten eine Tiefe von mindestens 30 cm und höchstens 60 cm.

Dank der Ausbildung des Einlasses als oder mit einem Kasten, der eine Klappe aufweist, kann ein Ballen eingelegt, die Klappe geschlossen und so sicher der Zerkleinerungsvorgang gestartet werden, ohne dass die Gefahr besteht, dass ein Bediener in den Zerkleinerungsbereich gerät.

Durch eine schwenkbare Anordnung des Kastens gegenüber dem Zerkleinerungsbereich kann bei hohen Tanks, also bei Tanks, deren Oberseite beispielswese mehr als 1 Meter oder mehr als 1,5 Meter über der Unterseite liegt, und einer Anordnung der Zerkleinerungsvorrichtung auf der Oberseite des Tanks ein Ballen vergleichsweise handlich seitlich in den Kasten eingebracht werden. Der Kasten kann dann mit dem Ballen geschwenkt werden, so dass der Ballen insgesamt oberhalb des Zerkleinerungsbereichs liegt und so durch die Schwerkraft auf den Zerkleinerungsbereich gedrückt wird, um den Ballen ohne weitere Fördereinrichtung zu zerkleinern.

Durch die angepasste Größe des Kastens kann eine kompakte Bauform der Zerkleinerungsvorrichtung und damit der Anspritzbegrünungsvorrichtung erreicht werden, die jedoch vorzugsweise eingerichtet ist, einen gesamten Ballen, insbesondere standardisierte Ballen, aufzunehmen.

Gemäß einer weiteren Ausführungsform umfasst die Anspritzbegrünungsvorrichtung einen Motor zum Antreiben des Zerkleinerungsbereichs. Der Motor ist vorzugsweise ein Elektromotor, der über eine Batterie der Anspritzbegrünungsvorrichtung, ein die Anspritzbegrünungsvorrichtung tragendes Fahrzeug oder ein als Verbrennungsmotor ausgebildetes Stromaggregat der Anspritzbegrünungsvorrichtung gespeist wird. Der Motor kann auch selbst als Verbrennungsmotor ausgebildet sein oder über eine hydraulische Einrichtung der Anspritzbegrünungsvorrichtung oder des die Anspritzbegrünungsvorrichtung tragenden Fahrzeugs angetrieben werden.

Außerdem umfasst die Anspritzbegrünungsvorrichtung eine Sicherheitseinrichtung, die vorzugsweise teilweise Bestandteil einer Steuerung ist, und den Betrieb des Motors nur dann erlaubt, wenn eine Klappe am Einlass des Zerkleinerungsbereichs geschlossen ist. So ist sichergestellt, dass der Zerkleinerungsbereich der Zerkleinerungsvorrichtung nur dann betrieben wird, wenn keine Gefahr besteht, dass ein Benutzer in den Zerkleinerungsbereich gerät. Vorzugsweise wird der Zerkleinerungsbereich auch nur dann aktiviert, wenn ein Mischmodus mit einer Steuerung, insbesondere nach Empfang eines Befehls von einem Benutzer, aktiviert wird.

Gemäß einer weiteren Ausführungsform tritt die Mischrohrleitung durch eine erste Öffnung des Tanks in den Innenraum des Tanks. Die Mischrohrleitung ist gegenüber dem Tank vorzugsweise abgedichtet. Das heißt, dass zwischen einer Außenseite der Mischrohrleitung und einer Wandung des Tanks, die die erste Öffnung bildet, vorzugsweise eine Dichtung angeordnet ist. Besonders bevorzugt weist der Tank eine zweite Öffnung auf, aus der die Mischrohrleitung aus dem Innenraum austritt. Auch die zweite Öffnung des Tanks ist gegenüber der Mischrohrleitung abgedichtet. Demnach ist also eine Dichtung zwischen der Außenseite der Mischrohrleitung und der zweiten Öffnung angeordnet. Gemäß einer alternativen Ausführungsform ist keine zweite Öffnung vorgesehen und die Mischrohrleitung endet im Innenraum des Tanks.

Die Mischrohrleitung führt jedoch vorzugsweise durch die erste Öffnung in den Innenraum des Tanks und durch die zweite Öffnung aus dem Innenraum des Tanks heraus. Eine Flüssigkeit kann so durch die Mischrohrleitung in den Innenraum des Tanks dank der ersten Öffnungen fließen. Ein Abschnitt der Mischrohrleitung verläuft demnach im Innenraum des Tanks, nämlich bevorzugt der Abschnitt der Mischrohrleitung zwischen der ersten Öffnung und der zweiten Öffnung. Der im Innenraum verlaufende Abschnitt der Mischrohrleitung umfasst mindestens einen Durchbruch. Der Durchbruch ist vorzugsweise eine Bohrung. Der Durchbruch entspricht der Mischdüse oder es ist in dem Durchbruch eine Düse angeordnet, um die Mischdüse zu bilden.

Der Durchbruch ist vorzugsweise eine Bohrung und demnach ist der Durchbruch vorzugsweise kreisrund ausgebildet. Der Durchbruch kann auch schlitzartig ausgebildet sein. Vorzugsweise ist der Durchbruch als Bohrung mit einem Durchmesser von mindestens 2 cm und höchstens 5 cm ausgebildet. Die Mischrohrleitung umfasst vorzugsweise einen Innendurchmesser im Bereich von 10 cm bis 20 cm, so dass besonders bevorzugt der Durchmesser der Bohrung zwischen einem Viertel und einer Hälfte des Innendurchmessers entspricht.

Eine einfach herzustellende Ausbildung der Mischrohrleitung durch Bereitstellen einer Rohrleitung mit einer Mischdüse ist somit möglich. Bevorzugt umfasst der Abschnitt der Mischrohrleitung im Innenraum des Tanks mehrere Durchbrüche, die jeweils eine Mischdüse bilden. Besonders bevorzugt umfasst die Mischrohrleitung mindestens drei Durchbrüche und maximal zehn Durchbrüche, die im Abschnitt der Mischrohrleitung im Innenraum besonders bevorzugt gleichmäßig verteilt über die Länge des Abschnitts der Mischrohrleitung im Innenraum angeordnet sind. Jeder der Durchbrüche bildet eine Mischdüse oder umfasst eine Mischdüse. Besonders bevorzugt sind sechs Mischdüsen vorgesehen.

Gemäß einer weiteren Ausführungsform ist die erste Öffnung oder die zweite Öffnung oder sind die erste Öffnung und die zweite Öffnung auf der Oberseite des Tanks angeordnet. Die Anforderungen an eine Abdichtung auf der Oberseite angeordneter Öffnungen gegenüber der Mischrohrleitung sind somit vergleichsweise einfach zu erfüllen.

Gemäß einer weiteren Ausführungsform sind die erste und die zweite Öffnung in gegenüberliegenden Seiten oder Wänden des Tanks angeordnet. Die Mischrohrleitung oder der Abschnitt der Mischrohrleitung verlaufen demnach in einer im Wesentlichen geraden Linie. Eine einfache Einbringung der Mischrohrleitung in einen fertig hergestellten im Wesentlichen geschlossenen Tank ist so möglich.

Gemäß einer weiteren Ausführungsform ist ein zweites Ende der Mischrohrleitung mit einem Rückspüleingang verbunden, der vorzugsweise zum Anschluss einer Wasserleitung dient. Das zweite Ende weist vorzugsweise ein Ventil zum Öffnen und Schließen einer Verbindung der Mischrohrleitung mit dem Rückspüleingang auf. Die Mischrohrleitung kann so dank dem Rückspüleingang vom zweiten Ende aus, insbesondere im Fall, dass die Mischrohrleitung verschmutzt oder verstopft ist, gespült werden. Hierzu kann an den Rückspüleingang ein Wasserschlauch angebracht und Wasser in die Mischrohrleitung eingebracht werden.

Gemäß einer weiteren Ausführungsform der Anspritzbegrünungsvorrichtung weist die Mischrohrleitung, insbesondere der im Innenraum verlaufende Abschnitt der Mischrohrleitung, mindestens zwei, vorzugsweise mindestens drei, Durchbrüche pro Meter Länge der Mischrohrleitung oder des im Innenraum verlaufenden Abschnitts auf, mit denen jeweils eine der Mischdüsen gebildet ist oder in denen jeweils eine der Mischdüsen angeordnet ist. Ein geeigneter Volumenstrom durch die Mischdüsen ist so bereitstellbar.

Gemäß einer weiteren Ausführungsform entspricht jeder der Durchbrüche jeweils einer Bohrung in der Mischrohrleitung.

Gemäß einer weiteren Ausführungsform sind die Düsen paarweise gegenüberliegend in der Mischrohrleitung angeordnet. So angeordnete Düsen sind einfach durch Bohrungen herstellbar, die quer zur Längsrichtung der Mischrohrleitung komplett durch die Mischrohrleitung verlaufen. Mit einem Bohrvorgang können zwei Mischdüsen hergestellt werden.

Gemäß einer weiteren Ausführungsform sind die Düsen paarweise abwechselnd versetzt in der Mischrohrleitung angeordnet. Eine Beeinträchtigung der Stabilität der Mischrohrleitung durch die Düsen wird so auf einen größeren Bereich verteilt und somit die Reduzierung der Stabilität pro Längenabschnitt reduziert.

Gemäß einer weiteren Ausführungsform weisen die Mischdüsen jeweils einen Durchmesser auf, der im Bereich zwischen 10 mm und 50 mm, bevorzugt im Bereich zwischen 30 mm und 40 mm, liegt. Ein geeigneter Volumenstrom durch die Mischdüsen ist so bereitstellbar.

Gemäß einer weiteren Ausführungsform umfasst die Anspritzbegrünungsvorrichtung eine Bypassrohrleitung. Die Bypassrohrleitung ist an einem ersten Ende der Bypassrohrleitung fluidleitend mit dem Pumpenfluidausgang und der Mischrohrleitung verbunden. Die Bypassrohrleitung ist über eine dritte, insbesondere gegenüber der Bypassrohrleitung abgedichtete Öffnung des Tanks, die vorzugsweise auf der Oberseite des Tanks angeordnet ist, in den Innenraum des Tanks geführt oder mündet in den Innenraum. Im Fall einer verstopften Mischrohrleitung kann so über die Bypassrohrleitung die druckbeaufschlagte Flüssigkeit, nämlich vorzugsweise die Anspritzmasse, in den Innenraum des Tanks fließen, ohne dass der Pumpendruck reguliert werden muss und/oder eine Beschädigung der Pumpe resultiert.

Gemäß einer weiteren Ausführungsform umfasst die Anspritzbegrünungsvorrichtung eine Steuerung. Außerdem umfasst die Anspritzbegrünungsvorrichtung einen Sensor zum Messen eines Drucks im Bereich des Pumpenfluidausgangs. Die Steuerung ist eingerichtet, die Pumpenleistung der Pumpe in Abhängigkeit vom gemessenen Druck zu steuern. Alternativ oder zusätzlich ist die Steuerung eingerichtet, ein Bypassventil, das zwischen dem Pumpenfluidausgang und der Bypassrohrleitung oder in der Bypassrohrleitung angeordnet ist, in Abhängigkeit vom gemessenen Druck zu steuern, also zu öffnen oder zu schließen. In Abhängigkeit von der Viskosität der Flüssigkeit, nämlich der Anspritzmasse, oder im Fall einer zugesetzten oder verstopften Mischrohrleitung, kann so ein veränderter Druck in der Mischrohrleitung, nämlich insbesondere im Bereich des Pumpenfluidausgangs, mit dem Sensor gemessen und entweder die Pumpenleistung und/oder das Bypassventil gesteuert werden, um Beschädigungen der Vorrichtung oder der Pumpe zu vermeiden.

Gemäß einer weiteren Ausführungsform umfasst die Anspritzbegrünungsvorrichtung mehrere, vorzugsweise genau vier oder mehr als vier, Ventile. Demnach umfasst die Anspritzbegrünungsvorrichtung insbesondere eines oder mehrere der folgenden Ventile: ein Abgabeventil, das im Fluidweg zwischen einem Schlauch der Abgabeeinheit und dem Pumpenfluidausgang angeordnet ist, ein Mischventil, das im Fluidweg zwischen dem Pumpenfluidausgang und der Mischrohrleitung angeordnet ist, ein Rückspülventil, das im Fluidweg zwischen der Mischrohrleitung und dem Rückspüleingang angeordnet ist, ein Bypassventil, das zwischen dem Pumpenfluidausgang und der Bypassrohrleitung oder in der Bypassrohrleitung angeordnet ist.

Verschiedene Betriebsmodi können so durch Öffnen oder Schließen der Ventile eingestellt werden.

Ferner umfasst die Anspritzbegrünungsvorrichtung gemäß einer weiteren Ausführungsform eine Steuerung oder die bereits zuvor genannte Steuerung, wobei die Steuerung eingerichtet ist, einen von mehreren Betriebsmodi der Anspritzbegrünungsvorrichtung, insbesondere durch Ansteuern der Pumpe und Ansteuern mehrerer Ventile der Anspritzbegrünungsvorrichtung, zu steuern. Demnach sind mit der Steuerung vorzugsweise ein Mischmodus, ein Abgabemodus und/oder ein Rückspülmodus aktivierbar.

Im Mischmodus ist vorzugsweise das Abgabeventil geschlossen, das Mischventil geöffnet, das Rückspülventil geschlossen und das Bypassventil in Abhängigkeit von einem gemessenen Sensor, der den Druck im Bereich des Pumpenfluidausgangs misst, geöffnet, geschlossen, teilweise geöffnet oder teilweise geschlossen. Im Abgabemodus ist vorzugsweise das Abgabeventil geöffnet, das Mischventil geschlossen, das Rückspülventil geschlossen und das Bypassventil geschlossen. Besonders bevorzugt kann das Bypassventil auch im Abgabemodus in Abhängigkeit von Druckwerten des Sensors geöffnet, geschlossen, teilweise geöffnet oder teilweise geschlossen werden. In einem Rückspülmodus sind das Abgabeventil, das Mischventil und das Bypassventil geschlossen, wohingegen das Rückspülventil geöffnet ist. Im Rückspülmodus kann auch das Mischventil zusätzlich zum Rückspülventil geöffnet sein, um so die Mischrohrleitung beidseitig zu spülen.

Gemäß einer weiteren Ausführungsform umfasst der Tank auf seiner Oberseite einen Revisionsschacht, der vorzugsweise mit einer Klappe geöffnet oder geschlossen werden kann. Durch den Revisionsschacht können neben dem Ballen weitere Zutaten oder Rohstoffe für die Flüssigkeit, nämlich die Anspritzmasse, in den Innenraum des Tanks eingegeben werden, die nicht zerkleinert werden müssen. Zusätzlich kann durch den Revisionsschacht eine gründliche Reinigung des Innenraums des Tanks vorgenommen werden.

Gemäß einer weiteren Ausführungsform ist die Steuerung eingerichtet, den Motor der Zerkleinerungsvorrichtung in Abhängigkeit von einem Füllstand, einem dem Sensor gemessenen Druck und/oder weiteren gemessenen Parametern zu steuern, insbesondere um zu vermeiden, dass zu viele feste Bestandteile vor dem Zumischen flüssiger Bestandteile im Tankinnenraum zu einer zu festen Anspritzmasse führen, so dass die Pumpe die Anspritzmasse nicht mehr ansaugen und durch die Mischrohrleitung pumpen kann. Einem Zusetzen oder Verstopfen der Mischrohrleitung wird somit entgegengewirkt.

Außerdem betrifft die Erfindung ein Verfahren zum Betreiben einer Vorrichtung nach einer der vorgenannten Ausführungsformen.

Ferner betrifft die Erfindung eine Verwendung einer Zerkleinerungsvorrichtung und/oder einer Mischrohrleitung in einer Anspritzbegrünungsvorrichtung nach einer der vorgenannten Ausführungsformen, die eine im Innenraum des Tanks angeordnete Mischdüse zum Einspritzen einer Flüssigkeit und zum Mischen der Flüssigkeit aufweist.

Weitere Ausführungsformen ergeben sich anhand der in den Figuren näher erläuterten Ausführungsbeispiele. Hierbei zeigen:
Fig. 1 eine Anspritzbegrünungsvorrichtung in einer Seitenschnittansicht und
Fig. 2 eine Zerkleinerungsvorrichtung in Längsrichtung in teilweiser Schnittansicht.

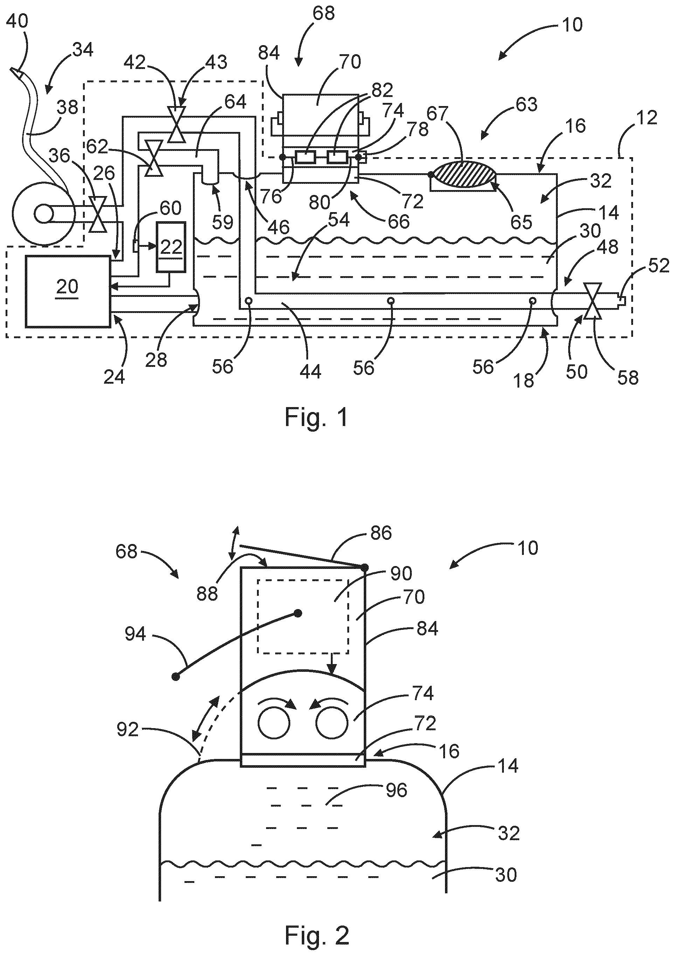

Fig. 1 zeigt eine Anspritzbegrünungsvorrichtung 10 mit einem Gehäuse 12, das beispielsweise auf einem Fahrzeug, wie einem Transporter oder Lastkraftwagen, oder auf einem Anhängerfahrzeug, das durch ein Fahrzeug ziehbar ist, anordenbar ist.

Im Gehäuse 12 ist ein Tank 14 angeordnet, der eine Oberseite 16 und eine Unterseite 18 aufweist. Ferner ist eine Pumpe 20 im Gehäuse 12 angeordnet, die über eine ebenfalls im Gehäuse 12 angeordnete Steuerung 22 gesteuert wird. Die Pumpe weist einen Pumpenfluideingang 24 und einen Pumpenfluidausgang 26 auf. Der Pumpenfluideingang 24 ist mit einer Auslassöffnung 28 des Tanks 14 fluidleitend verbunden. Die Pumpe 20 kann so eine Flüssigkeit 30 aus dem Innenraum 32 des Tanks 14 ansaugen und über ihren Fluidausgang 26 ausgeben.

Am Fluidausgang 26 der Pumpe 20 ist eine Abgabeeinheit 34 über ein Abgabeventil 36 fluidleitend verbindbar. Wird das Abgabeventil 36 geöffnet, wird die angesaugte Flüssigkeit 30 über das Abgabeventil 36 in die Abgabeeinheit 34 gepumpt, um aus der Abgabeeinheit 34 auf eine zu begrünende Fläche gespritzt zu werden. Die Abgabeeinheit 34 umfasst hierzu einen Schlauch 38, der über eine Trommel 40 auf- und abrollbar ist. Der Schlauch 38 ist an einem Ende fluidleitend über das Abgabeventil 36 mit dem Pumpenfluidausgang 26 verbindbar und weist am anderen Ende eine Abgabearmatur 40 auf.

Ferner ist der Pumpenfluidausgang 26 über ein Mischventil 42 mit einem ersten Ende 43 einer Mischrohrleitung 44 verbunden. Die Mischrohrleitung 44 führt über eine erste Öffnung 46 des Tanks 14 in den Innenraum 32 des Tanks 14 und über eine zweite Öffnung 48 aus dem Innenraum 32 des Tanks 14 hinaus. Demnach umfasst die Mischrohrleitung 44 einen im Innenraum 32 des Tanks 14 verlaufenden Abschnitt 54 der Mischrohrleitung 44. In diesem Abschnitt 54 sind Mischdüsen 56 angeordnet. An dem dem ersten Ende 43 gegenüberliegenden zweiten Ende 50 des Pumpenfluidausgangs 26 der Mischrohrleitung 44 ist ein Rückspüleingang 52 über ein Rückspülventil 58 fluidleitend mit der Mischrohrleitung 44 verbindbar.

Ist das Rückspülventil 58 des Rückspüleingangs 52 geschlossen und das Mischventil 42 geöffnet, wird die Flüssigkeit 30, die über die Auslassöffnung 28 und den Pumpenfluideingang 24 durch die Pumpe 20 angesaugt wird, über die Mischrohrleitung 44 und die Düsen 56 druckbeaufschlagt in den Innenraum 32 abgegeben, um die Flüssigkeit 30 zu mischen.

Ferner ist ein Sensor 60 vorgesehen, der mit der Steuerung 22 verbunden ist. Wird mit dem Sensor 60 ein Druck am Pumpenfluidausgang 26 erfasst, der oberhalb eines vordefinierten Schwellenwerts liegt, beispielsweise 5 bar, 6 bar oder 7 bar, wird ein Bypassventil 62 geöffnet. Bei geöffnetem Bypassventil 62 wird die von der Pumpe 20 geförderte Flüssigkeit 30 über eine Bypassrohrleitung 64 und eine dritte Öffnung 59 des Tanks 14, die vorzugsweise ebenfalls auf der Oberseite 16 des Tanks 14 angeordnet ist, direkt zurück in den Innenraum 32 des Tanks 14 gefördert.

Außerdem ist eine Öffnung 66 auf der Oberseite 16 des Tanks 14 angeordnet, über der eine Zerkleinerungsvorrichtung 68 angeordnet ist. Die Zerkleinerungsvorrichtung 68 umfasst einen Einlass 70 sowie einen Auslass 72. Zwischen dem Einlass 70 und dem Auslass 72 ist ein Zerkleinerungsbereich 74 angeordnet. In dem Zerkleinerungsbereich 74 ist eine drehbare Welle 76 angeordnet, die über einen Motor 78 um ihre Längsachse 80 drehbar ist und Fräsräder 82 aufweist. Zudem umfasst der Tank 14 einen Revisionsschacht 63 mit einer Öffnung 65, die über einen Deckel 67 zu öffnen oder zu schließen ist.

Die Zerkleinerungsvorrichtung in Fig. 1 entspricht einer vorteilhaften Ausbildung der Erfindung. Die Fig. 1 entspricht auch der Offenbarung eines Ausführungsbeispiels einer Anspritzbegrünungsvorrichtung gemäß einem weiteren Ausführungsbeispiel, die alle in der Fig. 1 gezeigten Merkmale offenbart, die nicht zur Zerkleinerungsvorrichtung 68 gehören. Fig. 1 steht demnach stellvertretend für ein weiteres Ausführungsbeispiel, das alle in Fig. 1 gezeigten Merkmale, abgesehen vom Einlass 70, Auslass 72, Zerkleinerungsbereich 74, drehbare Welle 76, Motor 78 mit Längsachse 80 und Fräsräder 82 aufweist.

Fig. 2 zeigt die Zerkleinerungsvorrichtung 68 im Schnitt aus Längsrichtung. Der Einlass 70 umfasst einen Kasten 84 mit einer Klappe 86, die eine Öffnung 88 öffnen und schließen kann. Durch die Öffnung 88 kann ein Ballen 90 in den Bereich des Einlasses eingelegt werden. Zum vereinfachten Einlegen des Ballens 90 lässt sich der Einlass entlang der strichlierten Linie 92 oberhalb des Zerkleinerungsbereichs 74 schwenken. Hierzu ist ein Griff 94 vorgesehen.

Demnach kann der Kasten 84 in einer unteren, hier nicht dargestellten, Position über die Öffnung 88 bei geöffneter Klappe 86 mit dem Ballen 90 beladen werden. Daraufhin wird über den Griff 94 der Kasten 84 in die dargestellte Position oberhalb des Zerkleinerungsbereichs 74 geschoben und die Klappe 86 geschlossen. Die Schwerkraft drückt den Ballen 90 in den Zerkleinerungsbereich 74, wobei Wellen 76 mit daran angeordneten Fräsrädern 82, die gegenläufig drehen, den Ballen 90 zerkleinern, so dass das zerkleinerte Material 96 des Ballens 90 in den Innenraum 32 des Tanks 14 fallen kann.

### Bezugszeichenliste

- 10: Anspritzbegrünungsvorrichtung
- 12: Gehäuse
- 14: Tank
- 16: Oberseite
- 18: Unterseite
- 20: Pumpe
- 22: Steuerung
- 24: Pumpenfluideingang
- 26: Pumpenfluidausgang
- 28: Auslassöffnung
- 30: Flüssigkeit
- 32: Innenraum
- 34: Abgabeeinheit
- 36: Abgabeventil
- 38: Schlauch
- 40: Trommel
- 42: Mischventil
- 43: erstes Ende der Mischrohrleitung
- 44: Mischrohrleitung
- 46: erste Öffnung
- 48: zweite Öffnung
- 50: zweites Ende der Mischrohrleitung
- 52: Rückspüleingang
- 54: Abschnitt
- 56: Mischdüsen
- 58: Rückspülventil
- 59: dritte Öffnung
- 60: Sensor
- 62: Bypassventil
- 63: Revisionsschacht
- 64: Bypassrohrleitung
- 65: Öffnung
- 66: Öffnung
- 67: Deckel
- 68: Zerkleinerungsvorrichtung
- 70: Einlass
- 72: Auslass
- 74: Zerkleinerungsbereich
- 76: Wellen
- 78: Motor
- 80: Längsachse
- 82: Fräsräder
- 84: Kasten
- 86: Klappe
- 88: Öffnung
- 90: Ballen
- 92: Linie
- 94: Griff
- 96: zerkleinertes Material

## Patentansprüche

1. Anspritzbegrünungsvorrichtung (10) zur Begrünung von Flächen, umfassend:
- einen Tank (14) mit einem Innenraum (32) zum Aufnehmen einer Flüssigkeit (30), insbesondere einer Anspritzmasse, und einer Auslassöffnung (28) zum Ausgeben der Flüssigkeit (30),
- eine Pumpe (20), insbesondere Dickstoffpumpe, zum Fördern der Flüssigkeit (30) aus dem Innenraum (32) des Tanks (14), wobei die Pumpe (20) einen Pumpenfluideingang (24) zum Verbinden mit der Auslassöffnung (28) des Tanks (14) und einen Pumpenfluidausgang (26) aufweist,
- eine Mischrohrleitung (44), die mehrere im Innenraum (32) des Tanks (14) angeordnete Mischdüsen (56) zum Einspritzen einer Flüssigkeit (30), insbesondere der aus dem Innenraum (32) mit der Pumpe (20) geförderten Flüssigkeit (30), aufweist und die zum Einspritzen mit dem Pumpenfluidausgang (26) verbindbar ist,
- eine Abgabeeinheit (34) zum Abgeben der Flüssigkeit (30) aus dem Innenraum (32) des Tanks (14) auf eine zu begrünende Fläche, wobei die Abgabeeinheit (34) vorzugsweise mit dem Pumpenfluidausgang (26) zur Abgabe verbindbar ist.

2. Anspritzbegrünungsvorrichtung (10) nach Anspruch 1, wobei die Pumpe (20) eine Kreiselpumpe ist und/oder
die Pumpe (20) so ausgebildet oder ausgewählt ist, dass ein Volumenstrom der Pumpe (20) an ein Innenraumvolumen des Innenraums (32) angepasst ist, so dass, vorzugsweise bei mindestens 2 bar Förderdruck, der Innenraum (32) in weniger als 15 Minuten, vorzugsweise im Wesentlichen in 10 Minuten oder weniger, vollständig leerpumpbar ist, oder der Volumenstrom, in m3/h ausgedrückt, mindestens dem 0,004-fachen, dem 0,006-fachen oder mehr als dem 0,006-fachen des Innenraumvolumens, ausgedrückt in Liter, entspricht und/oder
das Innenraumvolumen im Bereich von 500 Litern bis 10000 Litern, bevorzugt im Bereich von 900 Litern bis 1500 Litern, liegt und/oder
der maximale Förderdruck der Pumpe mindestens 2,5 bar, mindestens 3 bar oder mindestens 3,5 bar entspricht.

3. Anspritzbegrünungsvorrichtung (10) nach Anspruch 1 oder Anspruch 2, wobei die Mischrohrleitung (44) eine Länge von mehr als 1,5 Metern oder mehr als 1,9 Metern bei einem Innenraumvolumen des Innenraums (32) von 500 Litern oder mehr aufweist und/oder
die Mischrohrleitung mindestens zwei oder mindestens drei Mischdüsen (56) pro Meter Länge aufweist und/oder
die Mischrohrleitung einen Durchmesser, der im Bereich zwischen 30 mm und 250 mm, bevorzugt im Bereich zwischen 50 mm und 100 mm, liegt.

4. Anspritzbegrünungsvorrichtung (10) nach einem der vorhergehenden Ansprüche, wobei die Anspritzbegrünungsvorrichtung (10) ferner eine Zerkleinerungsvorrichtung (68) zum Zerkleinern von in Ballen (90) bereitgestelltem Fasermaterial und zum Abgeben des zerkleinerten Fasermaterials (96) in den Innenraum (32) des Tanks (14) umfasst, wobei die Zerkleinerungsvorrichtung (68) vorzugsweise einen auf der Oberseite (16) des Tanks (14) angeordneten Trichter oder Schacht mit einem Einlass (70) und einem Auslass (72) umfasst, wobei der Einlass (70) zur Aufnahme des oder eines Abschnitts des Ballens (90) ausgebildet ist und der Auslass (72) in einer Öffnung (66) auf der Oberseite (16) des Tanks (14) mündet.

5. Anspritzbegrünungsvorrichtung (10) nach Anspruch 4, wobei die Zerkleinerungsvorrichtung (68) zwischen dem Einlass (70) und dem Auslass (72) mindestens einen Zerkleinerungsbereich (74) zum Zerkleinern des Fasermaterials, das am Einlass (70) als Ballen (90) bereitgestellt wird, und zum Ausgeben des zerkleinerten Ballens am Auslass (72) aufweist, wobei der Zerkleinerungsbereich (74) mindestens eine drehbare Welle (76), vorzugsweise zwei drehbare Wellen (76), die besonders bevorzugt im Betrieb gegenläufig drehen, umfasst, wobei die Welle (76) ein oder mehrere Fräsräder (82) entlang ihrer Längsachse (80) verteilt, aufweist und/oder
der Einlass (70) als Kasten (84) ausgebildet ist, der vorzugsweise mit einer Klappe (86) zu öffnen und zu schließen und/oder schwenkbar gegenüber dem Zerkleinerungsbereich (74) ausgebildet ist, wobei der Kasten (84) vorzugsweise in seiner Größe angepasst ist, derart, dass er einen Ballen (90) des Fasermaterials vollständig aufnimmt, wobei der Kasten (84) vorzugsweise eine Länge von mindestens 60 cm und höchstens 110 cm, eine Breite von mindestens 20 cm und höchstens 50 cm und eine Tiefe von mindestens 30 cm und höchstens 60 cm aufweist und/oder
die Anspritzbegrünungsvorrichtung (10) einen Motor (78) zum Antreiben des Zerkleinerungsbereichs (74) aufweist und die Anspritzbegrünungsvorrichtung (10) eine Sicherheitseinrichtung aufweist, die den Betrieb des Motors (78) nur dann erlaubt, wenn eine Klappe (86) der Zerkleinerungsvorrichtung (68) zum Verschließen des Einlasses (70) geschlossen ist und vorzugsweise die Zerkleinerungsvorrichtung (68) in einem Mischmodus ist.

6. Anspritzbegrünungsvorrichtung (10) nach einem der vorhergehenden Ansprüche, wobei die Mischrohrleitung (44) durch eine erste, insbesondere gegenüber der Mischrohrleitung (44) abgedichtete, Öffnung (46) des Tanks (14) in den Innenraum (32) eintritt und durch eine zweite, insbesondere gegenüber der Mischrohrleitung (44) abgedichtete, Öffnung (48) des Tanks (14) aus dem Innenraum (32) austritt, so dass ein Abschnitt (54) der Mischrohrleitung (44) im Innenraum (32) des Tanks (14) verläuft und wobei der im Innenraum (32) verlaufende Abschnitt (54) der Mischrohrleitung (44) mindestens einen Durchbruch aufweist, mit dem die mindestens eine Mischdüse (56) gebildet oder in dem die mindestens eine Mischdüse (56) angeordnet ist, wobei der Durchbruch insbesondere einer Bohrung entspricht.

7. Anspritzbegrünungsvorrichtung (10) nach Anspruch 6, wobei die erste und/oder die zweite Öffnung (46, 48) auf der Oberseite (16) des Tanks (14) angeordnet sind oder die erste und die zweite Öffnung (46, 48) in gegenüberliegenden Seiten oder Wänden des Tanks (14) angeordnet sind, so dass die Mischrohrleitung (44) oder der Abschnitt (54) der Mischrohrleitung in einer im Wesentlichen geraden Linie verläuft und/oder wobei ein zweites Ende der Mischrohrleitung (44) mit einem Rückspüleingang (52) verbunden oder verbindbar ist.

8. Anspritzbegrünungsvorrichtung (10) nach einem der vorhergehenden Ansprüche, wobei die Mischrohrleitung (44), insbesondere der im Innenraum (32) verlaufende Abschnitt (54) der Mischrohrleitung (44), mindestens zwei, vorzugsweise mindestens drei, Durchbrüche pro Meter Länge der Mischrohrleitung (44) oder des im Innenraum (32) verlaufenden Abschnitts (54) aufweist, mit denen jeweils eine der Mischdüsen (56) gebildet ist oder in denen jeweils einer der Mischdüsen (56) angeordnet ist, wobei vorzugsweise jeder der Durchbrüche jeweils einer Bohrung in der Mischrohrleitung (44) entspricht und/oder
die Düsen paarweise gegenüberliegend in der Mischrohrleitung (44) oder abwechselnd versetzt in der Mischrohrleitung (44) angeordnet sind und/oder
jede der Mischdüsen (56) einen Durchmesser im Bereich von 10 mm bis 50 mm, vorzugsweise im Bereich von 30 mm bis 40 mm, aufweist.

9. Anspritzbegrünungsvorrichtung (10) nach einem der vorhergehenden Ansprüche, wobei die Anspritzbegrünungsvorrichtung (10) eine Bypassrohrleitung (64) umfasst, die an einem ersten Ende der Bypassrohrleitung (64) fluidleitend mit dem Pumpenfluidausgang (26) und der Mischrohrleitung (44) verbunden oder verbindbar ist, wobei die Bypassrohrleitung (64) über eine dritte, insbesondere gegenüber der Bypassrohrleitung (64) abgedichtete, Öffnung (59) des Tanks (14), die vorzugsweise auf der Oberseite (16) des Tanks (14) angeordnet ist, mit einem zweiten Ende der Bypassrohrleitung (64) in den Innenraum mündet.

10. Anspritzbegrünungsvorrichtung (10) nach einem der vorhergehenden Ansprüche, wobei die Anspritzbegrünungsvorrichtung (10) eine Steuerung (22) und einen Sensor (60) zum Messen eines Drucks im Bereich des Pumpenfluidausgangs (26) aufweist und die Steuerung (22) eingerichtet ist,
i) eine Pumpleistung der Pumpe (20) in Abhängigkeit vom gemessenen Druck zu steuern und/oder
ii) ein Bypassventil (62), das zwischen dem Pumpenfluidausgang (26) und der Bypassrohrleitung (64) oder in der Bypassrohrleitung (64) angeordnet ist, in Abhängigkeit vom gemessenen Druck zu steuern.

11. Anspritzbegrünungsvorrichtung (10) nach einem der vorhergehenden Ansprüche, wobei die Anspritzbegrünungsvorrichtung (10) mehrere, vorzugsweise genau vier oder mehr als vier, Ventile umfasst, um verschiedene Betriebsmodi der Anspritzbegrünungsvorrichtung (10) einzustellen und die Anspritzbegrünungsvorrichtung (10) insbesondere eines oder mehrerer der folgenden Ventile umfasst:
- ein Abgabeventil (36), das im Fluidweg zwischen einem Schlauch (38) der Abgabeeinheit (34) und dem Pumpenfluidausgang (26) angeordnet ist,
- ein Mischventil (42), das im Fluidweg zwischen dem Pumpenfluidausgang (26) und der Mischrohrleitung (44) angeordnet ist,
- ein Rückspülventil (58), das im Fluidweg zwischen der Mischrohrleitung (44) und dem Rückspüleingang (52) angeordnet ist und/oder
- das Bypassventil (62), das zwischen dem Pumpenfluidausgang (26) und der Bypassrohrleitung (64) angeordnet ist.

12. Anspritzbegrünungsvorrichtung (10) nach einem der vorhergehenden Ansprüche, wobei die Anspritzbegrünungsvorrichtung (10) eine Steuerung (22) umfasst, die eingerichtet ist, die Ventile der Anspritzbegrünungsvorrichtung (10) zu steuern und insbesondere einen Mischmodus, einen Abgabemodus und/oder einen Rückspülmodus zu aktivieren oder zu deaktivieren.

13. Anspritzbegrünungsvorrichtung (10) nach einem der vorhergehenden Ansprüche, wobei der Tank (14) auf seiner Oberseite (16) einen Revisionsschacht (63) aufweist.

14. Verfahren zum Betreiben einer Anspritzbegrünungsvorrichtung (10) nach einem der Ansprüche 1 bis 13, insbesondere in einem Mischmodus, einem Abgabemodus und/oder einem Rückspülmodus.

15. Verwendung einer Zerkleinerungsvorrichtung (68) und/oder einer Mischrohrleitung (44) in einer Anspritzbegrünungsvorrichtung (10) mit einem Tank (14) mit einem Innenraum (32) zum Aufnehmen einer Flüssigkeit (30) und einer Auslassöffnung (28) zum Ausgeben der Flüssigkeit (30) und mindestens einer im Innenraum (32) des Tanks (14) angeordneten Mischdüse (56) zum Einspritzen einer Flüssigkeit (30) zum Mischen der Flüssigkeit (30).
